# EUROPÄISCHE PATENTSCHRIFT

(11) **EP 0 894 175 B1**
(45) Veröffentlichungstag und Bekanntmachung des Hinweises auf die Patenterteilung: **06.10.1999**
(21) Anmeldenummer: 97923736.9
(22) Anmeldetag: 08.04.1997
(51) Int. Cl.: E05B 9/08

(54) **FÜR EINE RASTMONTAGE EINGERICHTETER STANGENVERSCHLUSS**
ROD LOCKING DEVICE DESIGNED FOR SNAP-FITTING
DISPOSITIF DE FERMETURE A BARRES CONCU POUR ETRE MONTE PAR ENCLIQUETAGE

(30) Priorität: 19.04.1996 DE 29606992 U
(43) Veröffentlichungstag der Anmeldung: 03.02.1999
(73) Patentinhaber: EMKA BESCHLAGTEILE GmbH & Co. KG, D-42551 Velbert (DE)
(72) Erfinder: SAUERLAND, Manfred, D-45144 Essen (DE); RUNGE, Friedhelm, D-42349 Wuppertal (DE)
(74) Vertreter: Müller, Karl-Ernst, Dr., Dipl.-Ing.
(86) Internationale Anmeldenummer: DE9700727
(87) Internationale Veröffentlichungsnummer: WO9740247

(56) Entgegenhaltungen:
- EP-A- 0 157 159
- EP-A- 0 649 955
- DE-A- 2 654 591
- DE-A- 2 803 805
- FR-A- 2 700 356
- GB-A- 2 077 344

## Beschreibung

Die Erfindung betrifft einen Stangenverschluß zum Verriegeln von Schranktüren insbesondere an dünnwandigen Schaltschränken, mit einer Anordnung von im Schrankinneren zwischen einer Öffnungsstellung und einer Verriegelungsstellung verschiebbaren und zur Verriegelung mit am Schrankkorpus befestigten Verschlußhaltern zusammenwirkende Verriegelungsmittel aufweisenden Verriegelungsstangen, wobei zum Antrieb der Verriegelungsstangen ein Kurzstangen mit einer Verbindung zum Anhängen der äußeren Verriegelungsstange führend aufnehmender, zweiteiliger Schloßkasten mit einem darin vorgesehenen und mittels einer auf der Außenseite der Schranktür angeordneten Betätigungsvorrichtung drehbaren Antriebsorgan für die Kurzstangen vorgesehen ist, und wobei ein erster Teil des Schloßkastens von einem durch einen Türdurchbruch steckbaren, einstückig mit der Grundplatte verbundenen Ansatz der Grundplatte gebildet und ein zweiter Teil des Schloßkastens mit dem ersten Teil deckungsgleich ausgeführt ist und die Grundplatte über seitlich an dem ersten Schloßkastenteil ausgebildete Federzungen in dem Türdurchbruch verrastbar ist.

Ein derartiger Stangenverschluß ist in der DE-A 26 54 591 beschrieben; bei dem bekannten Stangenverschluß ist der als Verbindungsteil bezeichnete erste Schloßkastenteil bereits über entsprëchende Federzungen in dem Türdurchbruch verrastbar, jedoch weist der an sich kongruent zum Verbindungsteil als starres Gehäuseteil ausgebildete zweite Schloßkastenteil eine solche Anordnung der Kurzstangen auf, daß diese auch in eingeschobenem Zustand über die Kontur des ersten beziehungsweise des zweiten Schloßkastensteils hervorstehen, so daß der zweite, die Kurzstangen führende Schloßastenteil erst von der Rückseite der Tür an dem ersten Schloßkastenteil montierbar ist, wenn der erste Schloßkastenteil in dem Türdurchbruch festgelegt und verrastet ist. Hierzu ist eine Schraubverbindung mit in entsprechend vorgesehene Hülsen eingreifenden Befestigungsschrauben ausgebildet.

Mit dem bekannten Stangenverschluß ist der Nachteil einer noch umständlichen Montage verbunden, weil der zweite Schloßkastenteil erst in einem gesonderten Montageschritt auf den ersten Schloßkastenteil aufsetzbar und mit diesem vor Ort, also bei bereits montierter Tür verbindbar ist.

Der Erfindung liegt daher die Aufgabe zugrunde, einen gattungsgemäßen Stangenverschluß zur Verfügung zu stellen, der ohne besondere Befestigungsmittel und Werkzeugeinsatz in einem Montageschritt an der Schranktür zu montieren ist.

Die Erfindung sieht in ihrem Grundgedanken vor, daß die Kurzstangen in ihrer Abmessung derart ausgelegt und in dem Schloßkasten angeordnet sind, daß sie in ihrer in den Schloßkasten eingeschobenen Stellung die Außenabmessungen des ersten Schloßkastenteils nicht überragen und der Schloßkasten in vormontiertem Zustand mit den in den Schloßkasten eingeschobenen Kurzstangen durch den Türdurchbruch führbar ist. Mit der Erfindung ist der Vorteil verbunden, daß die Endmontage des bereits vormontiert vorliegenden Stangenverschlusses an der Schranktür gänzlich ohne Einsatz von weiteren Befestigungsmitteln und Werkzeugen erfolgen kann. Es ist lediglich erforderlich, die Grundplatte mit dem daran montierten und die Kurzstangen zum Einhängen der Verriegelungsstangen bereits aufweisenden Schloßkasten durch den Türdurchbruch zu stecken und durch Druck auf die Grundplatte den Schloßkasten als ganzen in dem Türdurchbruch zu verrasten, wobei sich die an dem Schloßkasten befindlichen, an sich bekannten Federzungen hinter dem Türblatt verhaken.

Nach einem Ausführungsbeispiel der Erfindung sind die Federvorsprünge an den Längsseiten des ersten Schloßkastenteils jeweils in Nähe der vier Eckpunkte des Schloßkastens angeordnet, womit eine entsprechende Stabilität der Verrastung des Stangenverschlusses sichergestellt ist.

Nach einem Ausführungsbeispiel der Erfindung ist vorgesehen, daß mehrere Federzungen mit jeweils unterschiedlichem Abstand ihrer zur Grundplatte gerichteten Rastkante und der Grundplatte zum Einrasten an Türdurchbrüchen von Schranktüren mit unterschiedlicher Materialstärke angeordnet sind. Hiermit ist der Vorteil verbunden, daß der Stangenverschluß zur Montage an Schranktüren mit unterschiedlicher Materialstärke eingerichtet ist, da beispielsweise übliche Schranktüren mit 1,5 mm oder 2 mm Materialstärke ausgeführt sind. Wenn die Federzungen einen Abstand von 1,5 mm beziehungsweise 2 mm ihrer Rastkante zu der außen sitzenden Grundplatte aufweisen, kann die Grundplatte ohne weitere Maßnahmen in derartigen unterschiedlichen Türen verrastet werden.

Nach einem Ausführungsbeispiel der Erfindung ist der zweite Schloßkastenteil an den ersten Schloßkastenteil über eine zentrale, in die Welle der Betätigungsvorrichtung eingreifenden Schraube gehaltert, wobei diese Befestigung schon bei der Vormontage des Stangenverschlusses erfolgen kann.

Es ist nach einem Ausführungsbeispiel der Erfindung zweckmäßig, wenn der zweite Schloßkastenteil mit dem ersten Schloßkastenteil durch Verrastung von zugeordneten Formschlußgestaltungen verbunden ist; auch bei dieser Verbindung des zweiten Schloßkastenteils mit dem ersten Schloßkastenteil ist eine Halterung der Welle der Betätigungsvorrichtung in dem Schloßkasten erforderlich. Es ist jedoch mit dieser Ausführungsform der Erfindung der besondere Vorteil verbunden, daß ein Austausch der Betätigungsvorrichtung nach Lösen der die Welle haltenden Schraube ohne eine Demontage des Schloßkastens erfolgen kann.

Soweit in der gattungsbildenden EP 0 261 266 B1 auch ein Ausführungsbeispiel des bekannten Stangenverschlusses für die Montage in zwei rechteckigen Türdurchbrüchen bestimmt ist, dient dort der zweite Türdurchbruch bei der Montage eines mit einem Schwenkhebel als Betätigungsvorrichtung ausgerüsteten Stangenverschlusses zur Aufnahme und Verriegelung eines an dem Schwenkhebel sitzenden Zylinderschlosses. Soweit ein derartiges Lochbild in einer Schaltschranktür ausgebildet ist, ist nach einem Ausführungsbeispiel der Erfindung vorgesehen, daß in dem ersten Türdurchbruch die Grundplatte mit Schloßkasten und Kurzstangen verrastbar ist und daß in dem zweiten Türdurchbruch eine Platte mit einem außensitzenden Zylinderschloß über zugeordnete Federzungen verrastbar ist, dessen Schloßdaumen in der Schließstellung des Zylinderschlosses in einen Ausschnitt der an dem zweiten Türdurchbruch verlaufenden Verriegelungsstange eingreift und diese in der Offenstellung des Zylinderschlosses freigibt. Hiermit ist der Vorteil verbunden, daß eine zusätzliche Sicherung des Stangenverschlusses für den Fall gegeben ist, daß die Betätigungsvorrichtung lediglich für einen Steckschlüssel eingerichtet ist.

Sofern ein Lochbild mit zwei Türdurchbrüchen vorgesehen ist und die zusätzliche Sicherung über ein Zylinderschloß entbehrlich erscheint, kann der zweite Türdurchbruch durch eine in den Türdurchbruch einsetzbare und in diesem über zugeordnete Federzungen verrastbare Blind-Platte abgedeckt sein.

In der Zeichnung sind Ausführungsbeispiele der Erfindung wiedergegeben, welche nachstehend beschrieben sind. Es zeigen:
- Fig. 1: einen Stangenverschluß zur Montage in einem Türdurchbruch in einer schaubildlichen Darstellung,
- Fig. 2: den Stangenverschluß gemäß Figur 1 in einer geschnittenen Seitenansicht,
- Fig. 3: einen Stangenverschluß zur Montage in zwei Türdurchbrüchen mit einer zusätzlichen, schließbaren Verriegelung der Verriegelungsstangen,
- Fig. 4: den Gegenstand der Figur 3 in einer geschnittenen Seitenansicht.

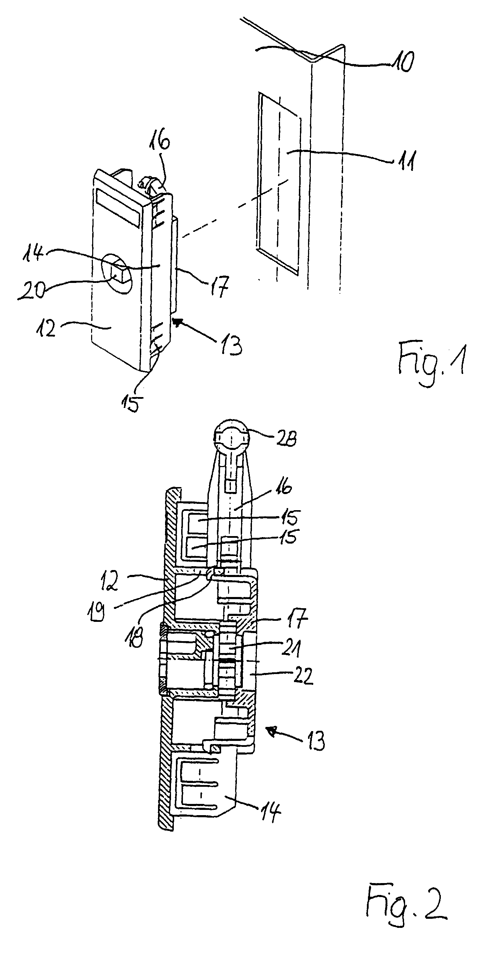

Wie Figur 1 zu entnehmen ist, weist eine ausschnittsweise dargestellte Schranktür 10 einen Türdurchbruch 11 auf, in welchem ein Stangenverschluß zu montieren ist. Der Stangenverschluß hat eine Grundplatte 12, an welchem ein durch den Türdurchbruch 11 steckbarer Schloßkasten 13 sitzt, wobei ein erster Teil 14 des Schloßkastens 13 einstückig mit der Grundplatte 12 verbunden ist; an diesem ersten Teil 14 des Schloßkastens 13 sind Federzungen 15 angebracht, die sich mit ihrer der Grundplatte 12 zugewandten Rastkante beim Einstecken des Schloßkastens 13 in den Türdurchbruch 11 an dem Blatt der Tür 10 verrasten und somit die Grundplatte 12 mit Schloßkasten 13 in dem Türdurchbruch 11 festlegen.

Wie sich aus Figur 2 ergibt, sind jeweils zwei unterschiedliche Federzungen 15 für unterschiedliche Materialstärken der Tür 10 eingerichtet, indem die Rastkanten der Federzungen jeweils einen auf eine Türstärke von beispielsweise 1,5 mm und 2 mm eingestellten Abstand zur Fläche der Grundplatte 12 aufweisen.

Der Schloßkasten 13 wird durch einen türinnenseitig aufgesetzten zweiten Teil 17 des Schloßkastens vervollständigt, wobei dieser zweite Schloßkastenteil 17 über in an dem ersten Schloßkastenteil 14 vorgesehene Ausnehmungen 19 einrastende Rasthaken 18 mit dem ersten Schloßkastenteil 14 verrastbar ist. In dem so gebildeten Schloßkasten 13 sind Kurzstangen 16 verschiebbar und von dem in dem Schloßkasten 13 gelagerten Ritzel 21 antreibbar geführt, wobei die Kurzstangen 16 an ihren äußeren Enden eine Verbindungseinrichtung 28 in Form von Haltevorsprüngen aufweisen, an welche in der aus Figur 4 ersichtlichen Weise Verriegelungsstangen 27 anhängbar sind. Das in dem Schloßkasten 13 gelagerte Ritzel 21 ist über die Betätigung 20 drehbar, wobei in die Welle der Betätigung 20 zu deren Halterung in dem Schloßkasten 13 eine Schraube 22 einschraubbar ist. Die Kurzstangen 16 sind in ihrer Abmessung so ausgelegt, daß sie, wie aus Figur 1 zu entnehmen ist, in der eingeschobenen Stellung die Außenabmessungen des durch den Türdurchbruch 11 steckbaren ersten Schloßkastenteils 14 nicht überragen.

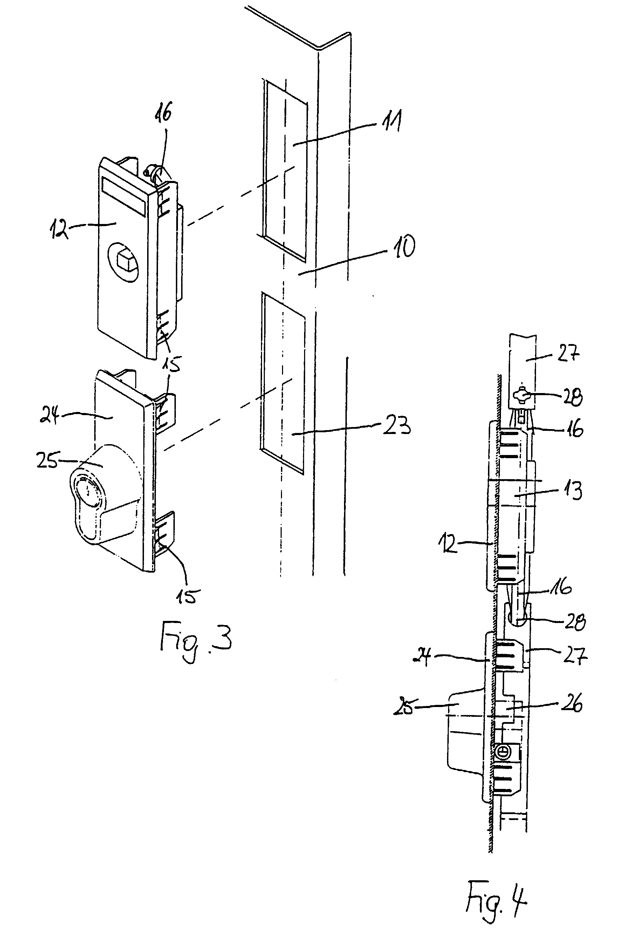

In den Figuren 3 und 4 ist ein weiteres Ausführungsbeispiel der Erfindung mit einem zur Montage in zwei Türdurchbrüchen eingerichteten Stangenverschluß vorgesehen; hierbei ist eine zweite Platte 24 mit einem daran sitzenden Zylinderschloß 25 vorgesehen, die in den zweiten Türdurchbruch 23 einrastbar ist, wobei der im einzelnen nicht dargestellte Schloßdaumen des Zylinderschlosses 25 in einen an der zugeordneten Verriegelungsstange 27 vorgesehenen Ausschnitt 26 eingreift, so daß in der Schließstellung des Zylinderschlosses 25 eine Längsverschiebung der Verriegelungsstange 27 verhindert ist, während in der Offenstellung des Zylinderschlosses 25 die Verriegelungsstange 27 freigegeben ist, so daß über Drehung der Betätigung 20 der Stangenverschluß zwischen seiner Öffnungsstellung und seiner Verriegelungsstellung beweglich ist.

## Patentansprüche

1. Stangenverschluß zum Verriegeln von Schranktüren (10), insbesondere an dünnwandigen Schaltschränken, mit einer Anordnung von im Schrankinneren zwischen einer Öffnungsstellung und einer Verriegelungsstellung verschiebbaren und zur Verriegelung mit am Schrankkorpus befestigten Verschlußhaltern zusammenwirkende Verriegelungsmittel aufweisenden Verriegelungsstangen (27), wobei zum Antrieb der Verriegelungsstangen (27) ein Kurzstangen (16) mit einer Verbindung (28) zum Anhängen der äußeren Verriegelungsstange (27) führend aufnehmender, zweiteiliger Schloßkasten (13) mit einem darin vorgesehenen und mittels einer auf der Außenseite der Schranktür (10) angeordneten Betätigungsvorrichtung (20) drehbaren Antriebsorgan für die Kurzstangen (16) vorgesehen ist, und wobei ein erster Teil (14) des Schloßkastens (13) von einem durch einen Türdurchbruch (11) steckbaren, einstückig mit der Grundplatte (12) verbundenen Ansatz der Grundplatte gebildet und ein zweiter Teil (17) des Schloßkastens (13) mit dem ersten Teil (14) deckungsgleich ausgeführt ist und die Grundpatte (12) über seitlich an dem ersten Schloßkastenteil (14) ausgebildete Federzungen (15) in dem Türdurchbruch (11) verrastbar ist, dadurch gekennzeichnet, daß die Kurzstangen (16) in ihrer Abmessung derart ausgelegt und in dem Schloßkasten (13) angeordnet sind, daß sie in ihrer in den Schloßkasten (13) eingeschobenen Stellung die Außenabmessungen des ersten Schloßkastenteils (14) nicht überragen und der Schloßkasten (13) in vormontiertem Zustand mit den in den Schloßkasten (13) eingeschobenen Kurzstangen durch den Türdurchbruch (11) führbar ist.

2. Stangenverschluß nach Anspruch 1, dadurch gekennzeichnet, daß die Federzungen (15) an den Längsseiten des ersten Schloßkastenteils (14) jeweils in Nähe der vier Eckpunkte des Schloßkastens (13) angeordnet sind.

3. Stangenverschluß nach Anspruch 1 oder 2, dadurch gekennzeichnet, daß mehrere Federzungen (15) mit jeweils unterschiedlichem Abstand ihrer zur Grundplatte (12) gerichteten Rastkante und der Grundplatte (12) zum Einrasten an Türdurchbrüchen (11) von Schranktüren (10) mit unterschiedlicher Materialstärke angeordnet sind.

4. Stangenverschluß nach einem der Ansprüche 1 bis 3, dadurch gekennzeichnet, daß der zweite Schloßkastenteil (17) an dem ersten Schloßkastenteil (14) über eine Zentrale, in die Welle der Betätigungsvorrichtung (20) eingreifenden Schraube (22) gehaltert ist.

5. Stangenverschluß nach einem der Ansprüche 1 bis 3, dadurch gekennzeichnet, daß der zweite Schloßkastenteil (17) mit dem ersten Schloßkastenteil (14) durch Verrastung von zugeordneten Formschlußgestaltungen (18, 19) verbunden ist.

6. Stangenverschluß nach einem der Ansprüche 1 bis 5 zur Montage in zwei rechteckigen, zu der Anordnung der Verriegelungsstangen fluchtenden Türdurchbrüchen, dadurch gekennzeichnet, daß in dem ersten Türdurchbruch (11) die Grundplatte (12) mit Schloßkasten (13) und Kurzstangen (16) verrastbar ist und daß in dem zweiten Türdurchbruch (23) eine Platte (24) mit einem außensitzenden Zylinderschloß (25) über zugeordnete Federzungen (15) verrastbar ist, dessen Schloßdaumen in der Schließstellung des Zylinderschlosses (25) in einen Ausschnitt (26) der an dem zweiten Türdurchbruch (23) verlaufenden Verriegelungsstange (27) eingreift und diese in der Offenstellung des Zylinderschlosses (25) freigibt.

7. Stangenverschluß nach Anspruch 6, dadurch gekennzeichnet, daß der zweite Türdurchbruch (23) mit einer in dem Türdurchbruch (23) einsetzbaren und über zugeordnete Federzungen (15) verrastbaren Blind-Platte abdeckbar ist.

## Claims

1. Bar closure for locking cabinet doors (10), in particular on thin-walled switch cabinets, with an arrangement of locking bars (27) which can be displaced in the cabinet interior between an opening position and a locking position and, for locking purposes, comprise locking means cooperating with closure holders fastened to the cabinet body, wherein a two-part lock case (13) is provided to drive the locking bars (27), which lock case accommodates in guiding fashion short bars (16) with a connection (28) for attaching the outer locking bar (27) and has a drive member, which is provided therein and is rotatable by means of an actuating device (20) disposed on the outside of the cabinet door (10), for the short bars, and wherein a first part (14) of the lock case (13) is formed by a projection of the base plate, which projection can be passed through a door aperture (11) and is solid with the base plate (12), and a second part (17) of the lock case (13) is constructed so as to be congruent with the first part (14), and the base plate (12) can be engaged in the door aperture (11) via spring tongues (15) formed on the sides of the first lock case part (14), characterised in that the short bars (16) are dimensioned and disposed in the lock case (13) such that, when in their inserted position in the lock case (13), they do not project beyond the external dimensions of the first lock case part (14) and the lock case (13) can be guided through the door aperture (11) in the pre-assembled state with the short bars inserted in the lock case (13).

2. Bar closure according to claim 1, characterised in that the spring tongues (15) are disposed at the longitudinal sides of the first lock case part (14) each in the vicinity of the four corner points of the lock case (13).

3. Bar closure according to claim 1 or 2, characterised in that a plurality of spring tongues (15) are each disposed with their engaging edge, which is directed towards the base plate (12), at a different spacing from the base plate (12) for engaging at door apertures (11) of cabinet doors (10) of differing material thickness.

4. Bar closure according to any one of claims 1 to 3, characterised in that the second lock case part (17) is secured to the first lock case part (14) via a central screw (22) which engages in the shaft of the actuating device (20).

5. Bar closure according to any one of claims 1 to 3, characterised in that the second lock case part (17) is connected to the first lock case part (14) through the engagement of associated interlocking configurations (18, 19).

6. Bar closure according to any one of claims 1 to 5 for assembling in two rectangular door apertures in alignment with the locking bar arrangement, characterised in that the base plate (12) with the lock case (13) and the short bars (16) can be engaged in the first door aperture (11), and that a plate (24) with an externally seated cylinder lock (25) can be engaged in the second door aperture (23) via associated spring tongues (15), the tumbler of which lock engages in a cutout (26) in the locking bar (27) extending at the second door aperture (23) when the cylinder lock (25) is in the closed position and releases this bar when the cylinder lock (25) is in the open position.

7. Bar closure according to claim 6, characterised in that the second door aperture (23) can be covered with a blind plate which can be inserted in the door aperture (23) and engaged via associated spring tongues (15).

## Revendications

1. Fermeture à tringles pour le verrouillage de portes d'armoires (10), en particulier sur des armoires de distribution à parois minces, avec une disposition de tringles de verrouillage (27) comprenant des éléments de verrouillage pouvant être déplacés à l'intérieur de l'armoire entre une position d'ouverture et une position de verrouillage et agissant de concert avec des supports de verrouillage fixés sur le corps de l'armoire pour assurer le verrouillage, un boîtier de serrure (13) en deux parties recevant et guidant des tiges courtes (16) avec un élément de liaison (28) pour l'accrochage de la tige de verrouillage extérieure (27) avec un élément d'entraînement pour les tiges courtes (16) prévu à l'intérieur du boîtier de serrure et pouvant être mis en rotation au moyen d'un dispositif d'actionnement (20) disposé sur le coté extérieur de la porte de l'armoire (10) étant prévu pour l'entraînement des tiges de verrouillage (27) et une première partie (14) du boîtier de serrure (13) étant constituée d'une embase de la plaque de base enfichable au travers d'une ouverture (11) pratiquée dans la porte et reliée d'un seul tenant avec la plaque de base (12) et une deuxième partie (17) du boîtier de serrure (13) étant réalisée de niveau avec la première partie (14) et la plaque de base (12) étant encliquetable dans l'ouverture de la porte (11) au moyen de languettes flexibles (15) réalisées dans la première partie du boîtier de serrure (14) sur le côté, caractérisée en ce que les tiges courtes (16) présentent des dimensions telles et sont disposées de telle manière dans le boîtier de serrure (13) qu'en position rentrée dans le boîtier de serrure (13), elles ne dépassent pas les dimensions extérieures de la première partie du boîtier de serrure (14) et que le boîtier de serrure (13) peut passer au travers de l'ouverture de la porte (11) à l'état de montage préliminaire avec les tiges courtes introduites dans le boîtier de serrure (13).

2. Fermeture à tringles selon la revendication 1, caractérisée en ce que les languettes flexibles (15) sont disposées sur les cotés longitudinaux de la première partie du boîtier de serrure (14) respectivement à proximité des quatre points d'angles du boîtier de serrure (13).

3. Fermeture à tringles selon la revendication 1 ou 2, caractérisée en ce que plusieurs languettes flexibles (15) avec respectivement un espacement différent de leur bord d'encliquetage dirigé vers la plaque de base (12) et la plaque de base (12) pour l'encliquetage dans les ouvertures de porte (11) de portes d'armoires (10) sont disposées avec des épaisseurs de matériaux différentes.

4. Fermeture à tringles selon l'une des revendications 1 à 3, caractérisée en ce que la deuxième partie du boîtier de serrure (17) est maintenue sur la première partie du boîtier de serrure (14) par une vis centrale (22) engrenant dans l'arbre du dispositif d'actionnement (20).

5. Fermeture à tringles selon l'une des revendications 1 à 3, caractérisée en ce que la deuxième partie du boîtier de serrure (17) est reliée à la première partie du boîtier de serrure (14) par encliquetage d'éléments façonnés correspondants (18,19).

6. Fermeture à tringles selon l'une des revendications 1 à 5 pour le montage dans deux ouvertures de porte rectangulaires alignées vers la disposition des barres de verrouillage, caractérisée en ce que la plaque de base (12) avec le boîtier de serrure (13) et les barres courtes (16) peuvent être encliquetées dans la première ouverture de porte (11) et qu'une plaque (24) avec une serrure à barillet (25) placée à l'extérieur peut être encliquetée dans la deuxième ouverture de porte (23) au moyen de languettes flexibles correspondantes (15), la came de serrure pénétrant, en position de fermeture de la serrure à barillet (25), dans une découpe (26) pratiquée dans la tige de verrouillage (27) positionnée au niveau de la deuxième ouverture de porte (23) et libérant celle-ci en position ouverte de la serrure à barillet (25).

7. Fermeture à tringles selon la revendication 6, caractérisée en ce que la deuxième ouverture de porte (23) peut être obturée par une plaque pleine pouvant être placée sur l'ouverture de porte (23) et encliquetée au moyen de languettes flexibles correspondantes (15).
